# EUROPÄISCHE PATENTANMELDUNG

(11) **EP 0 969 616 A1**
(43) Veröffentlichungstag der Anmeldung: **05.01.2000**
(21) Anmeldenummer: 98112144.5
(22) Anmeldetag: 30.06.1998
(51) Int. Cl.: H04J 3/16, H04M 11/06, H04L 1/12

(54) **Verfahren zur Optimierung der verfügbaren Übertragungskapazität bei Teilnehmeranschlussleitungsnetzen**

(71) Anmelder: SIEMENS AKTIENGESELLSCHAFT, 80333 München (DE)
(72) Erfinder: Schröder, Stefan, 80802 München (DE)

(57) **Zusammenfassung**

In Teilnehmeranschlußleitungsnetzen, über die Informationen nach einem xDSL Übertragungsverfahren ausgetauscht werden, besteht das Problem, daß die maximal mögliche Übertragungskapazität sehr stark von den physikalischen Randbedingungen abhängt. Ändern sich diese, so müssen die Modems sich erneut adaptieren. Wird die ursprüngliche Übertragungskapazität nicht mehr erreicht, wird die xDSL Strecke außer Betrieb genommen. Die Erfindung löst dieses Problem, indem ein Kommunikationskanal zwischen Modem und einer zentralen Steuerungslogik vorgesehen wird.

## Beschreibung

Die Erfindung betrifft ein Verfahren gemäß dem Oberbegriff von Patentanspruch 1.

In Teilnehmeranschlußleitungsnetzen (Access Networks) werden beim Stand der Technik Informationen nach einem dem Fachmann bekannten xDSL Übertragungsverfahren zwischen Teilnehmer und Teilnehmeranschlußleitungsnetz ausgetauscht. Als xDSL Übertragungsverfahren können beispielsweise das ADSL oder HDSL Übertragungsverfahren verwendet werden. Bei derartigen Übertragungsverfahren hängt die maximal mögliche Übertragungskapazität sehr stark von den physikalischen Randbedingungen ab, die während des Übertragungsvorganges im Teilnehmeranschlußleitungsnetz vorherrschen. So spielen beispielsweise Länge und Durchmesser der Teilnehmeranschlußleitung sowie die Führung im Bündel mit anderen Teilnehmeranschlußleitungen eine entscheidende Rolle.

Weiterhin werden in typischen Teilnehmeranschlußleitungsnetzen alle Vebindungen von einer zugeordneten Steuerungslogik, die als Service Node (SN) bezeichnet wird, gesteuert und überwacht. Dieser Service Node führt beispielsweise für jeden vom Teilnehmer oder vom Netz kommenden Verbindungsaufbauwunsch eine 'Connection Admission Control' durch. Dies bedeutet, daß eine Überprüfung daraufhin vorgenommen wird, ob ausreichend Übertragungskapazität zur Verfügung steht, um die geforderte Verbindung zum Teilnehmer hin durchzuschalten.

Die Teilnmehmeranschlußleitungen sind zu beiden Seiten über Modemeinheiten abgeschlossen. Die gegenwärtig verfügbaren Modems passen sich selbständig an die gerade vorliegenden physikalischen Randbedingungen an. Ändern sich diese Bedingungen beispielsweise dadurch, daß ein weiterer xDSL Teilnehmer im selben Leitungsbündel hinzugeschaltet wird, so müssen die Modems sich erneut adaptieren, da gegebenenfalls die Übertragungskapazität beispielsweise durch Übersprechen reduziert wird. Dies führt dazu, daß die verfügbare Bandbreite reduziert wird.

Sollte es nach dem Adaptierungsvorgang nicht möglich sein, die ursprüngliche Übertragungskapazität wieder zu erreichen, wird die betreffende xDSL Strecke außer Betrieb genommen. Dies führt zu unerwünschten Service-Unterbrechungen.

Der Erfindung liegt die Aufgabe zugrunde, einen Weg aufzuzeigen, wie die Übertragung von Informationen in Teilnehmeranschlußnetzen für xDSL Teilnehmer flexibler gestaltet werden kann.

Die Erfindung wird ausgehend von den im Oberbegriff von Patentanspruch 1 angegebenen Merkmalen durch die im Kennzeichen angegebenen Merkmale gelöst.

Vorteilhaft an der Erfindung ist insbesondere, daß keine Service-Unterbrechung vorgenommen wird, falls nach dem Adaptierungsvorgang eine geringere Bandbreite verfügbar ist. Falls eine höhere Bandbreite verfügbar ist, kann diese sofort vom Anwender genutzt werden.

Vorteilhafte Weiterbildungen der Erfindung sind in den Unteransprüchen angegeben.

Die Erfindung wird im folgenden anhand eines figürlich dargestellten Ausführungsbeispiels näher erläutert:

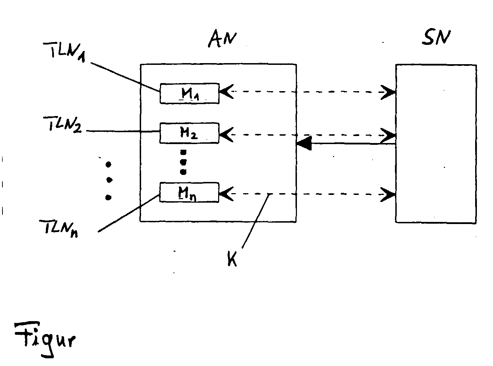

Demgemäß ist ein Teilnehmeranschlußleitungsnetz AN aufgezeigt, das an eine Mehrzahl von Teilnehmern TLN₁...TLNₙ herangeführt ist. Im Teilnehmeranschlußleitungsnetz AN sind Modemeinheiten M₁...Mₙ angeordnet, über die Informationen den jeweils zugeordneten Teilnehmern TLN₁..TLNₙ übermittelt wird. In der Figur sind lediglich die im Netz angeordneten Modemeinheiten aufgezeigt. Die Einstellungen im Teilnehmeranschlußleitungsnetz AN werden von einem zugeordneten Service Node SN erfaßt und verwaltet.

Erfindungsgemäß wird vorgeschlagen, eine spezielle Maintenance-Kommunikation zwischen einer xDSL Modemeinheit Mₓ und dem Service Node SN zu erstellen. Ändern sich nun die physikalischen Randbedingungen, indem beispielsweise ein Übersprechen von einem der anderen Teilnehmer im Bündel erfolgt, so adaptieren sich die Modems erneut, da gegebenenfalls die Übertragungskapazität reduziert wird. In diesem Fall wird nun dieser Umstand dem Service Node SN über die Maintenance-Kommunikation mitgeteilt. Wird die Bandbreite reduziert, kann die neue Bandbreite daraufhin untersucht werden, ob neu hinzukommende Verbindungen noch zugelassen werden können.

Damit wird die Übertragung von Informationen trotz einer niedrigeren verfügbaren Übertragungskapazität fortgesetzt. Sollte es zu einer Erhöhung der Bandbreite kommen, bleibt diese nicht (wie beim Stand der Technik) ungenutzt sondern steht weiteren Verbindungen sofort zur Verfügung. Damit reduziert sich die Service-Unterbrechungszeit. Weiterhin wird dem Teilnehmer ermöglicht, wenn auch in eingeschränktem Umfang, die bisherigen Dienste weiter nutzen zu können. Schließlich werden für den Netzbetreiber hohe Einnahmeverluste vermieden.

Die spezielle Maintenance-Kommunikation wird durch Einführung eines Maintenance-Kommunikationskanals K zwischen der xDSL-Modemeinheit Mₓ und dem Service Node SN realisiert. Damit können die Verbindungssteuerungsmechanismen im Servide Node verbleiben. Ebenso können die grundsätzlichen Architekturen bestehender und zukünftiger Teilnehmeranschlußleitungsnetze gleich bleiben. Damit ist eine erhebliche Reduzierung von Kosten für den Netzbetreiber verbunden. Sollte sich bei einer Neuadaption der xDSL Strecke eine höhere übertragungskapazität ergeben, so erlaubt dieses Verfahren diese Kapazität auch auszunutzen. Damit wird dem Teilnehmer ein besserer Dienst zur Verfügung gestellt sowie die Einnahmemöglichkeit des Netzbetreibers erhöht.

Die Kopplung zwischen der xDSL Modemeinheit und dem Service Node kann auf beliebige Weise erfolgen. So kann der Maintenance-Kommunikationskanal K zwischen dem Service Node SN und den netzseitigen oder den teilnehmerseitigen Modemeinheiten geschaltet werden. Dadurch wird es möglich, xDSL Strecken auch bei geänderter Übertragungskapazität in Betrieb zu halten und die Service Unterbrechungszeiten zu reduzieren.

Der Kommunikationskanal K kann beispielsweise als eigener Zeitschlitz in TDM Systemen wie auch als eigener ATM Kanal oder spezielle ATM Steuerungszellen in ATM basierten Netzen realisiert werden. In gleicher Weise ist eine Realisierung oder aber auch über Funkstrecke möglich. Weiterhin ist es denkbar, diesen Kommunikationskanal über eine TMN Verbindung zu realisieren. Der Informationsaustausch kann dabei periodisch oder bedarfsweise erfolgen. Weiterhin ist vorgesehen, die xDSL Modemeinheit eigenständig mit dem Service Node kommunizieren zu lassen oder nur auf Abfragen hin. Sollten sich mehrere xDSL Modemeinheiten im Teilnehmeranschlußleitungsnetz befinden, so lassen sich deren Kommunikationskanäle zu einem Service Node bündeln. Es lassen sich auch gewisse Mindestübertragungsraten und/oder die Änderungsgranularität vorgeben. Im Service Node kann die Information der tatsächlich zur Verfügung stehenden xDSL Übertragungskapazität selbstverständlich auch zu andern Zwecken als der 'connection admission control' verwendet werden.

## Patentansprüche

1. Verfahren zu Übertragen von Informationen über Teilnehmeranschlußleitungsnetze, mit
einer Mehrzahl von Teilnehmern (TLN₁...TLNₙ), die über wenigstens ein Teilnehmeranschlußleitungsnetz (AN) zusammengeführt sind, über welches Informationen nach einem xDSL Übertragungsverfahren geleitet werden, mit
Modemeinheiten (M₁...Mₙ), die beidseitig einer Teilnehmeranschlußleitung angeordnet sind, und mit
einer Steuerungslogik (SN), über die Einstellungen im Teilnehmeranschlußleitungsnetz (AN) vorgenommen werden,
**dadurch gekennzeichnet,** daß wenigstens ein Kommunikationskanal (K) zwischen einer Modemeinheit (M₁...Mₙ) und der Steuerungslogik (SN) vorgesehen wird, über den Informationen bezüglich der auf der zugeordneten Teilnehmeranschlußleitung vorhandenen Bandbreite geleitet werden.

2. Verfahren nach Anspruch 1,
**dadurch gekennzeichnet,**
daß die Modemeinheiten (M₁...Mₙ) im Teilnehmeranschlußleitungsnetz (AN) angeordnet sind.

3. Verfahren nach Anspruch 1,
**dadurch gekennzeichnet,**
daß die die Modemeinheiten (M₁...Mₙ) beim Teilnehmer (TLN₁...TLNₙ) angeordnet sind.

4. Verfahren nach Anspruch 1 bis 3,
**dadurch gekennzeichnet,**
daß der Informationsaustausch über den Kommunikationskanal (K) periodisch erfolgt.

5. Verfahren nach Anspruch 1 bis 3,
**dadurch gekennzeichnet,**
daß der Informationsaustausch über den Kommunikationskanal (K) bedarfsweise erfolgt.

6. Verfahren nach einem der vorstehenden Ansprüche,
**dadurch gekennzeichnet,**
daß der wenigstens eine Kommunikationskanal (K) über nichtleitungsgebundene Träger übertragen wird.
